Europäisches Patentamt

European Patent Office

Office européen des brevets

(11) Veröffentlichungsnummer: **0 253 117**
**B1**

(12) **EUROPÄISCHE PATENTSCHRIFT**

(45) Veröffentlichungstag der Patentschrift:
**15.11.89**

(21) Anmeldenummer: **87107920.8**

(22) Anmeldetag: **02.06.87**

(51) Int. Cl.⁴: **F 16 C 11/06**

(54) Kugelgelenk.

(30) Priorität: **12.07.86 DE 3623542**

(43) Veröffentlichungstag der Anmeldung:
**20.01.88 Patentblatt 88/3**

(45) Bekanntmachung des Hinweises auf die Patenterteilung:
**15.11.89 Patentblatt 89/46**

(84) Benannte Vertragsstaaten:
**DE FR GB IT**

(56) Entgegenhaltungen:
**FR-A-2 014 555**
**GB-A-2 038 928**
**US-A-3 177 020**

(73) Patentinhaber: **TRW Ehrenreich GmbH & Co. KG,
Hansa- Allee 190, D-4000 Düsseldorf 11 (DE)**

(72) Erfinder: **Henkel, Günther, Eckenerstrasse 18,
D-4000 Düsseldorf (DE)**

(74) Vertreter: **Patentanwälte Dipl.- Ing. Alex Stenger
Dipl.- Ing. Wolfram Watzke Dipl.- Ing. Heinz J.
Ring, Kaiser- Friedrich- Ring 70, D-4000 Düsseldorf
11 (DE)**

## Beschreibung

Gegenstand der Erfindung ist ein Kugelgelenk für Kraftfahrzeuge mit einer zwischen einem Kugelkopf und einem Gelenkgehäuse eingesetzten Lagerschale aus Kunststoff, die mit einem Randflansch auf einer ersten Innenstufe im Gelenkgehäuse aufliegt, mit einem Verschlußdeckel, der mit einer Innenseite unter Vorspannung an dem Randflansch anliegt und mit dem Rand seiner Innenseite an einer zweiten, gegenüber der ersten radial nach außen versetzten Innenstufe des Gelenkgehäuses anliegt, deren Abstand in Zapfenachsrichtung von der ersten Innenstufe die maximale Verformung des Randflansches durch den unter Vorspannung anliegenden Verschlußdeckel festlegt, wobei die Lagerschale eine sich bis zu einer Öffnung des Gelenkgehäuses für einen Kugelzapfen erstreckende Außenschale und eine an dem Verschlußdeckel anliegende Innenschale aufweist.

Die GB-OS-2 038 928 offenbart ein Kugelgelenk mit einer Lagerschale aus Kunststoff, die etwa in der Äquatorebene des Kugelkopfes geteilt ist. Die dem Kugelzapfen zugewandte Außenschale und die dem Verschlußdeckel zugewandte Innenschale weisen im Äquatorbereich des Kugelkopfes ineinandergreifende Vorsprünge und Ausnehmungen auf, welche die beiden Lagerschalenhälften an einer gegenseitigen Verdrehung hindern. Toleranzen insbesondere bei der Herstellung des Gelenkgehäuses können zu einem Versatz der Außenschale und der Innenschale führen, so daß sich diese nicht zu einer idealen Kugelfläche ergänzen. Durch eine seitliche Verspannung des Kugelkopfes können also die Betriebskennwerte des Kugelgelenkes erheblichen Schwankungen unterliegen. Die Innenschale wird an einem Randflansch im Gelenkgehäuse gehalten, der zwischen einer Innenstufe und einem eingewalzten Verschlußdeckel verspannt ist, wobei sich der Verschlußdeckel auf einer radial und axial versetzten weiteren Innenstufe abstützt. Axiale Belastungen des Kugelzapfens führen zu einer erheblichen Beanspruchung des Randflansches und können zu dessen Abreißen führen. Die Vorspannung des Kugelgelenkes wird über elastisch verformbare Erhebungen der Innenschale eingestellt, welche sich an dem Gehäusedeckel abstützen. Durch den Randflansch der Innenschale bedingt werden die Vorspannkräfte jedoch überwiegend in das Gelenkgehäuse eingeleitet, womit eine zusätzliche Belastung des Randflansches einhergeht.

Aus der DE-PS-1 953 116 ist bereits ein Kugelgelenk bekannt, dessen Lagerschale einen Randflansch hat, der auf einer Innenstufe des Gelenkgehäuses aufliegt und von einem eingewalzten Verschlußdeckel gehalten wird. Zum Ausgleich von Fertigungstoleranzen hat die Lagerschale an der zapfenseitigen Stirnfläche Erhebungen, die an einer Gehäuseinnenschulter abgestützt sind, wobei sie Fertigungstoleranzen des Gelenkgehäuses durch plastische Verformung ausgleichen. Bei dieser Konstruktion ist es jedoch nachteilig, daß der Randflansch durch hohe Einwalzkräfte bis zum Abreißen verformt werden kann und dann seine Dicht- und Haltefunktion nicht mehr erfüllt. Folgen der stark schwankenden und unregelmäßigen Verformung des Randflansches können ferner stark schwankende Betriebskennwerte der Kugelgelenke sein. Sei dem bekannten Kugelgelenk muß der Einwalzvorgang deshalb mit hoher Präzision durchgeführt und das Kugelgelenk nachträglich einer Prüfung unterzogen werden.

Aus der DE-PS-1 775 151 ist ein Kugelgelenk bekannt, dessen Lagerschale mit elastisch verformbaren Erhebungen an der Innenseite des Verschlußdeckels anliegt. Bei dieser Konstruktion werden Fertigungstoleranzen beim Einwalzen des Gehäusedeckels durch Verformung der Erhebungen kompensiert. Die Lagerschale hat jedoch keinen Randflansch und muß deshalb zapfenseitig von einer Gehäuseinnenschulter gehalten werden und ist nur unzulänglich gegen Verdrehen im Gelenkgehäuse gesichert.

Davon ausgehend liegt der Erfindung die Aufgabe zugrunde, ein technisch verbessertes Kugelgelenk zu schaffen, dessen Lagerschale an einem Randflansch verdrehsicher im Gelenkgehäuse gehalten ist, ohne daß dieser beim Einwalzen oder bei axialen Stoßbelastungen des Kugelzapfens abreißen kann und das bei den üblichen Maßtoleranzen konstantere Betriebskennwerte aufweist.

Zur technischen Lösung dieser Aufgabe wird vorgeschlagen, daß die Außenschale den zwischen Verschlußdeckel und erster Innenstufe vorgespannten Randflansch aufweist und daß die Innenschale in eine stirnseitige Öffnung der Außenschale eingesetzt ist.

Der Erfindungsgedanke besteht also darin, weiterhin eine als Endanschlag für den Verschlußdeckel wirkende zweite Innenstufe vorzusehen, die den Randflansch vor hohen Einwalzkräften und Verformungen bis hin zur Beschädigung schützt. Bei einem erfindungsgemäßen Kugelgelenk ist der Verschlußdeckel stets mit relativ hohem Walzdruck einwalzbar, wobei er dennoch in eine gut reproduzierbare und durch die Anordnung der zweiten Innenstufe definierte Lage im Gelenkgehäuse gelangt. Der Walzdruck kann also konstant auf das maximale Volumen des Walzrandes abgestimmt werden, wobei ein Verstellen des Walzdruckes durch ein Schwanken des Walzrandvolumens entfällt. Da der Randflansch durch die erste Innenstufe ebenfalls exakt im Gelenkgehäuse positioniert ist, ist die Verformung des Randflansches durch den aufliegenden Verschlußdeckel sehr gut reproduzierbar. Auf diese Weise werden sowohl ausreichende Haltekräfte, als auch eine Verdrehsicherung erreicht, ohne daß der Randflansch unregelmäßig gequetscht oder bis zum Abreißen von der Außenschale beschädigt wird. Mit der Erfindung ist es also möglich, sowohl den Walzvorgang zu vereinfachen, als auch die Einspannverhältnisse für den Randflansch genauer festzulegen. Infolgedessen kann auch auf die bisher übliche Prüfung der Dichtigkeit des Walzrandes verzichtet werden und sind konstantere Betriebskennwerte des Kugelgelenkes zu erwarten.

Die Innenschale braucht jedoch bei der Montage nicht gegenüber der Außenschale positioniert zu werden, um diese gegen eine Verdrehung im Gelenkgehäuse zu sichern. Bei der Montage wird die Innenschale lediglich in die stirnseitige Öffnung der Außenschale eingesetzt und anschließend das Kugelgelenk durch Einwalzen des Verschlußdeckels mit beinahe beliebigem Walzdruck verschlossen. Da die Innenschale ausschließlich zwischen Kugelkopf und Verschlußdeckel verspannt ist und keiner seitlichen Verspannung unterliegt, kann sie Maßtoleranzen besser ausgleichen und Stöße in Zapfenachsrichtung besser abdämpfen als dies bei dem bekannten Kugelgelenk mit an der Innenschale angeformtem Randflansch der Fall ist. Der Werkstoff der Innenschale kann allein im Hinblick auf die gewünschte Vorspannung ausgesucht werden.

Bei einer Ausgestaltung der Erfindung ist vorgesehen, daß die Innenschale mit formelastischen Rippen an dem Verschlußdeckel anliegt. Hierdurch kann die Elastizität der Innenschale im wesentlichen unabhängig von der getroffenen Werkstoffwahl gesteigert werden.

Bei einer weiteren Ausgestaltung ist vorgesehen, daß der Randflansch mindestens eine in Zapfenachsrichtung sich erstreckende, verformbare Erhebung hat, die durch den unter Vorspannung anliegenden Verschlußdeckel verformt wird. Es sind sowohl plastisch als auch elastisch verformbare Erhebungen denkbar, die auf einer beliebigen Seite oder beiden Seiten des Randflansches angeordnet sein können. Beim Einwalzen des Verschlußdeckels ist die Verformung des Randflansches im wesentlichen auf die Erhebung(en) beschränkt, was bereits eine gute Halterung und Verdrehsicherung ermöglicht. Da der Randflansch im wesentlichen unverformt ist, werden der Gesamtspannungszustand der Lagerschale und somit ihr Auflagedruck auf den Kugelkopf bzw. der Kugel praktisch nicht durch die Einspannung des Randflansches beeinflußt. Durch mindestens eine Erhebung werden somit engere Toleranzen der Betriebskennwerte ermöglicht.

Bei einer weiteren Ausgestaltung ist vorgesehen, daß die Erhebung(en) ausschließlich verschlußseitig auf dem Randflansch angeordnet ist (sind), wodurch die Lagerschale bei der Herstellung einfacher entformbar ist und bei zweiteiligen Lagerschalen die Verspannung des Randflansches unabhängig von der Vorspannung des Kugelkopfes wählbar ist.

Bei einer weiteren Ausgestaltung läuft mindestens eine Erhebung rippenförmig auf dem Randflansch um die Zapfenachse um, so daß der Randflansch gleichmäßig verspannbar ist. Wenn eine rippenförmige Erhebung verschlußseitig angeordnet ist, kommt ihr zugleich eine Dichtfunktion zu, da sie Feuchtigkeit infolge ihrer hohen Flächenpressung einen erheblichen Widerstand entgegensetzt. Es können aber auch nockenförmige Erhebungen auf dem Randflansch angeordnet sein, welche eine sehr wirksame Verdrehsicherung bewirken.

Weitere Einzelheiten und Vorteile des Gegenstandes der Erfindung ergeben sich aus der nachfolgenden Beschreibung der zugehörigen Zeichnungen, in denen eine bevorzugte Ausführungsform eines erfindungsgemäßen Kugelgelenkes dargestellt worden ist. In den Zeichnungen zeigen:

Fig. 1     ein zusammengesetztes Kugelgelenk mit Verschlußdeckel, Außenschale und Innenschale im Längsschnitt;

Fig. 2     dasselbe Kugelgelenk im perspektivischen Sprengbild;

Fig. 3     Teilausschnitt III der Fig. 1 in vergrößerter Darstellung.

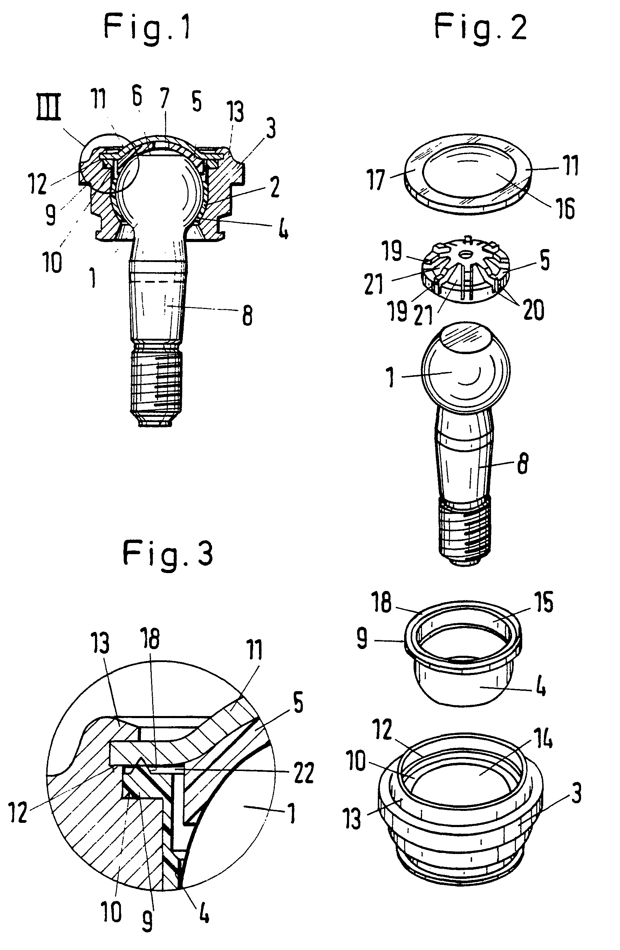

In der Fig. 1 ist ein erfindungsgemäßes Kugelgelenk mit einem Kugelkopf 1 dargestellt, der unter Zwischenlage einer Lagerschale 2 in ein Gelenkgehäuse 3 eingesetzt ist. Die Lagerschale 2 besteht aus einer Außenschale 4 und einer in eine stirnseitige Öffnung der Außenschale 4 eingesetzten Innenschale 5. Zwischen der Innenschale 5 und einer Polkappe 6 des Kugelkopfes 1 ist ein Fettreservoir 7 ausgebildet.

Die Außenschale 4 ist an einer, zur Öffnung für einen Kugelzapfen 8 hin sich verjüngenden Gehäuseinnenbohrung abgestützt und weist an der den Kugelzapfen 8 gegenüberliegenden Stirnseite einen umlaufenden Randflansch 9 auf. Der Randflansch 9 ist einerseits auf einer im Gelenkgehäuse 3 umlaufenden Innenstufe 10 abgestützt und wird andererseits von einem Verschlußdeckel 11 im Gelenkgehäuse gehalten. Der Randflansch 9 weist eine verschlußseitige Erhebung auf, die jedoch in der Fig. 1 schlecht erkennbar ist und weiter unten anhand der Fig. 3 erläutert wird. Der Verschlußdeckel 11 liegt auf einer zweiten umlaufenden, radial nach außen versetzten Innenstufe 12 des Gelenkgehäuses 3 auf und wird außen von einem eingebördelten Walzrand 13 des Gelenkgehäuses 3 gehalten.

Wie anhand der Fig. 2 ersichtlich, wird das Kugelgelenk zusammengesetzt, indem zunächst die Außenschale 4 in eine verschlußseitige Öffnung 14 des Gelenkgehäuses 3 eingesetzt wird, wobei die Außenschale 4 ausreichend zentriert ist, wenn sie mit ihrem Randflansch 9 auf der ersten Innenstufe 10 des Gelenkgehäuses 3 aufsitzt. Anschließend wird der Kugelzapfen 8 eingeschoben, bis der Kugelkopf 1 in der Außenschale ruht.

Dann wird die Innenschale 5 auf den Kugelkopf 1 aufgesetzt, wobei sie von dem Innenrand einer stirnseitigen Öffnung 15 der Außenschale 4 seitlich gehalten wird. Schließlich wird der Verschlußdeckel 11 mit einer zentralen Haube 16 auf die Innenschale 5 aufgesetzt, wobei er gleichzeitig mit einem Flachrand 17 an einer rippenförmig umlaufenden Erhebung 18 der Außenschale 4 anliegt. Durch Einbördeln des Walzrandes 13 wird schließlich der Verschlußdeckel 11 mit der Erhebung 18 des Randflansches 9 verspannt, bis er mit dem Rand seiner Innenseite auf der zweiten, radial nach außen versetzten Innenstufe 12 des Gelenkgehäuses 3 aufsitzt.

Die Innenschale 5 ist stirnseitig mit Rippen 19 und an diese angrenzende Einschnitte 20 versehen. Die Rippen 19 liegen innen an der Haube 16 an und vergrößern die Formelastizität der Innenschale 5, so daß diese Maßtoleranzen besser ausgleichen kann und Stöße in Zapfenachsrichtung besser abdämpft. Die maximale Verformung der Rippen 20 wird dann erreicht, wenn diese in die Einschnitte 20 hineingedrückt sind, so daß Anschläge 21 an der Innenseite der Haube 16 anliegen. Durch geeignete Bemessung kann auch erreicht werden, daß dann die seitlich ausgebauchten Rippen an den Begrenzungen der Einschnitte 20 anliegen.

Wie in der Fig. 3 gezeigt, ist die erste Innenstufe 10 so von der zweiten, radial nach außen versetzten Innenstufe 12 beabstandet, daß ein Spalt 22 zwischen Verschlußdeckel 11 und Randflansch 9 der Außenschale 4 ausgebildet ist. Hierdurch wird verhindert, daß der Randflansch 9 übermäßig verformt wird.

In den Spalt 22 hinein ragt eine zugespitzte, umlaufende Erhebung 18, deren Abmessungen unverformt die Höhe des Spaltes 22 überschreiten, wie dies in der Fig. 3 auch angedeutet ist. Bei eingesetztem und mittels eingebördeltem Walzrand 13 verspanntem Verschlußdeckel 11 jedoch ist die Erhebung 18 verformt, so daß eine die Außenschale 4 in axialer und Umfangsrichtung haltende Kraft aufgebaut wird. Durch geeignete Bemessung wird vorzugsweise für eine elastische Verformung der Erhebung 18 gesorgt, so daß die elastische Rückstellkraft eventuelle Setzvorgänge der Gehäusebauteile ausgleichen kann. Die Höhe des Spaltes 22 beträgt bei eingewalztem Verschlußdeckel 11 etwa 0,2 mm, wodurch erreicht wird, daß der Randflansch 9 in jedem Fall nur mit den Erhebungen 18 an dem Verschlußdeckel 11 anliegt.

Die umlaufende Erhebung 18 hat außer einer Halte- auch eine Dichtfunktion, da sie das Eindringen von Feuchtigkeit durch den Spalt 22 verhindert und andererseits auch wirksam einen Schmiermittelverlust unterdrückt. Durch die besonders hohe Flächenpressung im Auflagebereich der Erhebung 18 auf dem Verschlußdeckel 11 wird nämlich eine hervorragende Dichtwirkung erreicht.

Die Innenschale 5 ist zwischen dem Verschlußdeckel 11 und dem Kugelkopf 1 verspannt, wodurch die Vorspannung des Kugelgelenkes bestimmt wird. Die Vorspannung wird maßgeblich durch den Abstand der Innenstufen 10 und 12 festgelegt, so daß Kugelgelenke mit engtolerierten Betriebskennwerten resultieren.

## Patentansprüche

1. Kugelgelenk für Kraftfahrzeuge mit einer zwischen einem Kugelkopf (1) und einem Gelenkgehäuse (3) eingesetzten Lagerschale (2) aus Kunststoff, die mit einem Randflansch (9) auf einer ersten Innenstufe (10) im Gelenkgehäuse (3) aufliegt, mit einem Verschlußdeckel (11), der mit einer Innenseite unter Vorspannung an dem Randflansch (9) anliegt und mit dem Rand seiner Innenseite an einer zweiten, gegenüber der ersten radial nach außen versetzten Innenstufe (12) des Gelenkgehäuses (3) anliegt, deren Abstand in Zapfenachsrichtung von der ersten Innenstufe (10) die maximale Verformung des Randflansches (9) durch den unter Vorspannung anliegenden Verschlußdeckel (11) festlegt, wobei die Lagerschale (2) eine sich bis zu einer Öffnung des Gelenkgehäuses (3) für einen Kugelzapfen (8) erstreckende Außenschale (4) und eine an dem Verschlußdeckel (11) anliegende Innenschale (5) aufweist,
   dadurch gekennzeichnet,
   daß die Außenschale (4) den zwischen Verschlußdeckel (11) und erster Innenstufe (10) vorgespannten Randflansch (9) aufweist und
   daß die Innenschale (5) in eine stirnseitige Öffnung der Außenschale (4) eingesetzt ist.

2. Kugelgelenk nach Anspruch 1 dadurch gekennzeichnet, daß die Innenschale (5) mit formelastischen Rippen (19) an dem Verschlußdeckel (11) anliegt.

3. Kugelgelenk nach einem der Ansprüche 1 bis 2, dadurch gekennzeichnet, daß der Randflansch (9) mindestens eine in Zapfenachsrichtung sich erstreckende, verformbare Erhebung (18) hat, die durch das unter Vorspannung anliegende Verschlußteil verformt wird.

4. Kugelgelenk nach Anspruch 3, dadurch gekennzeichnet, daß die Erhebung(en) (18) ausschließlich verschlußseitig auf dem Randflansch (9) angeordnet ist (sind).

5. Kugelgelenk nach einem der Ansprüche 3 bis 4, dadurch gekennzeichnet, daß mindestens eine rippenförmige Erhebung (18) auf dem Randflansch (9) um die Zapfenachse umläuft.

6. Kugelgelenk nach einem der Ansprüche 3 bis 5, dadurch gekennzeichnet, daß nockenförmige Erhebungen auf dem Randflansch (9) angeordnet sind.

## Claims

1. Ball and socket joint for motor vehicles having a bearing shell (2) made of plastic inserted between a ball head (1) and a joint housing (3) which shell rests by an edge flange (9) upon a first internal step (10) in the joint housing (3), having a cover (11) which contacts the edge flange (9) with pretension by an internal side and contacts with the edge of its internal side a second internal step (12) of the joint housing (3) which is offset radially outwards relative to the first, the distance of which from the first internal step (10) in the direction of the spigot axis determines the maximum deformation of the edge flange (9) by the cover (10) when in contact under pretension, the bearing shell (2) exhibiting an outer shell (4) extending as far as an aperture of the joint housing (3) for a ball spigot (8) and an inner shell (5) which is in contact with the cover (11), characterized in that the outer shell (4) exhibits the edge flange (9) which is pretensioned between the cover (11) and the first internal step (10), and that the inner shell (5) is inserted into an end face aperture of the outer shell (4).

2. Ball and socket joint according to Claim 1, characterized in that the inner shell (5) contacts the cover (11) by resilient shaped ribs (19).

3. Ball and socket joint according to one of Claims 1 and 2, characterized in that the edge flange (9) has at least one deformable elevation (18) extending in the direction of the spigot axis, which is deformed by the cover when in contact under pretension.

4. Ball and socket joint according to Claim 3, characterized in that the elevation/s (18) is/are arranged on the edge flange (9) exclusively on the cover side.

5. Ball and socket joint according to one of Claims 3 and 4, characterized in that at least one rib-shaped elevation (18) encircles the spigot axis on the edge flange (9).

6. Ball and socket joint according to one of Claims 3 to 5, characterized in that cam-shaped elevations are arranged on the edge flange (9).

**Revendications**

1. Articulation sphérique pour véhicules automobiles comportant une coquille de coussinet (2) en matière synthétique qui est logée entre une tête sphérique (1) et un bâti d'articulation (3) et qui repose par une collerette (9) sur un premier épaulement interne (10) du bâti d'articulation (3), un couvercle de fermeture (11) qui, précontraint, est contigu par une face interne à la collerette (9) et qui, par le bord de sa face interne, porte contre un deuxième épaulement interne (12) du bâti d'articulation (3), décalé radialement vers l'extérieur par rapport au premier épaulement interne et dont la distance à ce dernier (10), dans la direction axiale du pivot, détermine la déformation maximale de la collerette (9) par le couvercle de fermeture (11) précontraint adjacent, la coquille de coussinet (2) présentant une coquille extérieure (4) s'étendant jusqu'à une ouverture du bâti d'articulation (3) destinée à un pivot sphérique (8) et une coquille intérieure (5) porte contre le couvercle de fermeture (11), caractérisée en ce que la coquille extérieure (4) présente la collerette précontrainte (9) entre le couvercle de fermeture (11) et un premier épaulement interne (10) et en ce que la coquille intérieure (5) est enfoncée dans une ouverture sur la face de la coquille extérieure (4).

2. Articulation sphérique selon la revendication 1, caractérisée en ce que la coquille intérieure (5) comportant des nervures (19) élastiques porte contre le couvercle de fermeture (11).

3. Articulation sphérique selon l'une des revendications 1 et 2, caractérisée en ce que la collerette (9) possède au minimum une protubérance (18) déformable s'étendant dans la direction axiale du pivot, qui est déformée par l'élément adjacent précontraint de fermeture.

4. Articulation sphérique selon la revendication 3, caractérisée en ce que la (les) protubérance(s) (18) est (sont) placée(s) sur la collerette (9) côté fermeture exclusivement.

5. Articulation sphérique selon l'une des revendications 3 et 4, caractérisée en ce qu'au minimum une protubérance (18) en forme de nervure sur la collerette (9) entoure l'axe du pivot.

6. Articulation sphérique selon l'une des revendications 3 à 5, caractérisée en ce que des protubérances en forme de mentonnets sont disposées sur la collerette (9).

# Fig. 1

# Fig. 2

# Fig. 3